# EUROPÄISCHE PATENTANMELDUNG

(11) **EP 2 368 673 A2**
(43) Veröffentlichungstag der Anmeldung: **28.09.2011**
(21) Anmeldenummer: 10013738.9
(22) Anmeldetag: 18.10.2010
(51) Int. Cl.: B25J 15/00, B25J 15/06, B23P 19/02

(54) **Roboterwerkzeug zum Setzen von Stopfen**

(30) Priorität: 27.01.2010 DE 102010005798
(71) Anmelder: Dr. Ing. h.c. F. Porsche AG, 70435 Stuttgart (DE)
(72) Erfinder: Baudisch, Matthias, 74321 Bietigheim-Bissingen (DE); Zietemann, Joerg, 71334 Waiblingen (DE)

(57) **Zusammenfassung**

Die Erfindung betrifft ein Roboterwerkzeug zum Setzen von Stopfen (18) in der industriellen Fertigung, mit einem Roboteranbaubereich (2), mit dem das Roboterwerkzeug (1) an einen Industrieroboter angebaut werden kann.

Um das Setzen von Stopfen in der industriellen Fertigung, insbesondere von Kraftfahrzeugen, weiter zu vereinfachen beziehungsweise zu automatisieren, weist das Roboterwerkzeug (1) einen hin und her bewegbaren Stößel (42) auf, mit dem ein Stopfen (18) aufgenommen und zugestellt werden kann.

## Beschreibung

Die Erfindung betrifft ein Roboterwerkzeug zum Setzen von Stopfen in der industriellen Fertigung, mit einem Roboteranbaubereich, mit dem das Roboterwerkzeug an einen Industrieroboter angebaut werden kann.

In der industriellen Fertigung werden Industrieroboter mit Greifern und verschiedenen Werkzeugen verwendet. Um einen Körper im Raum beliebig drehen und verschieben zu können, benötigt ein Industrieroboter sechs Bewegungsachsen. Vertikal-Knickarm-Roboter werden aufgrund ihrer Bauart auch als Gelenkroboter bezeichnet. Die universellen Einsatzmöglichkeiten der Gelenkroboter für die Handhabung und Bearbeitung hat auch zur Bezeichnung Universalroboter geführt.

Aufgabe der Erfindung ist es, das Setzen von Stopfen in der industriellen Fertigung, insbesondere von Kraftfahrzeugen, weiter zu vereinfachen beziehungsweise zu automatisieren.

Die Aufgabe ist bei einem Roboterwerkzeug zum Setzen von Stopfen in der industriellen Fertigung, mit einem Roboteranbaubereich, mit dem das Roboterwerkzeug an einen Industrieroboter angebaut werden kann, dadurch gelöst, dass das Roboterwerkzeug einen hin und her bewegbaren Stößel aufweist, mit dem ein Stopfen aufgenommen und zugestellt werden kann. Bei dem Industrieroboter handelt es sich vorzugsweise um einen Vertikal-Knickarm-Roboter mit sechs Achsen. In einer Lackiererei für Kraftfahrzeuge werden zum Beispiel pro Fahrzeug um die einhundert Stopfen handgesetzt. Durch das erfindungsgemäße Roboterwerkzeug kann das Stopfensetzen auf einfache Art und Weise automatisiert werden.

Ein bevorzugtes Ausführungsbeispiel des Roboterwerkzeugs ist dadurch gekennzeichnet, dass in den Stößel eine Vakuumzufuhr integriert ist, durch welche an einem freien Ende des Stößels ein Vakuum angelegt werden kann, um einen Stopfen an dem freien Ende des Stößels zu halten. Die Vakuumzufuhr ermöglicht es einerseits, einen Stopfen mit dem Stößel aufzunehmen, wenn das freie Ende des Stößels an oder in der Nähe des Stopfens positioniert wird. Darüber hinaus kann der aufgenommene Stopfen durch das an dem freien Ende des Stößels angelegte Vakuum bei einer Bewegung des Industrieroboters, insbesondere beim Zustellen des Stopfens, sicher an dem freien Ende des Stößels gehalten werden.

Ein weiteres bevorzugtes Ausführungsbeispiel des Roboterwerkzeugs ist dadurch gekennzeichnet, dass der Stößel mit Hilfe eines Zustallzylinders ein- und ausfahrbar ist. Bei dem Zustellzylinder handelt es sich vorzugsweise um einen Linearzylinder.

Ein weiteres bevorzugtes Ausführungsbeispiel des Roboterwerkzeugs ist dadurch gekennzeichnet, dass der Stößel und/oder der Zustellzylinder an einem Schwenkhalter einer Schwenkeinheit angebracht sind/ist, die ein Verschwenken des Stößels zwischen einer Stopfenaufnahmeposition und einer Stopfenmontageposition ermöglicht. In der Stopfenaufnahmeposition ist der Stößel zum Beispiel in der Nähe eines Vorrats von mehreren Stopfen so angeordnet, dass einer der Stopfen auf einfache Art und Weise durch Anlegen von Vakuum an dem freien Ende des Stößels aufgenommen werden kann. In der Stopfenmontageposition kann der aufgenommene Stopfen durch Ausfahren des Stößels auf einfache Art und Weise montiert werden.

Ein weiteres bevorzugtes Ausführungsbeispiel des Roboterwerkzeugs ist dadurch gekennzeichnet, dass der Schwenkhalter zwischen der Stopfenaufnahmeposition und der Stopfenmontageposition um 180 Grad verschwenkbar ist. Bei Bedarf kann der Schwenkhalter Zwischenstellungen einnehmen, zum Beispiel bei 90 Grad oder bei 45 Grad.

Ein weiteres bevorzugtes Ausführungsbeispiel des Roboterwerkzeugs ist dadurch gekennzeichnet, dass der Stößel mit Hilfe der Schwenkeinheit in seiner Stopfenaufnahmeposition in der Nähe eines Stopfenmagazins positionierbar ist, das an dem Industrieroboter befestigt ist. In dem Stopfenmagazin kann ein Vorrat von mehreren gleichen oder unterschiedlichen Stopfen vorgehalten werden, die mit Hilfe der Schwenkeinheit und des Stößels auf einfache Art und Weise einzeln entnommen werden können. Ein Verfahren des Roboters zu einer separaten Vorratsstation kann entfallen.

Ein weiteres bevorzugtes Ausführungsbeispiel des Roboterwerkzeugs ist dadurch gekennzeichnet, dass das Stopfenmagazin als Revolvermagazin ausgeführt ist, das unterschiedliche Stopfen umfasst, die bedarfsabhängig einzeln mit dem Stößel aufgenommen werden können. Das Revolvermagazin umfasst zum Beispiel eine drehbare Aufnahmeeinrichtung mit mehreren Stapeln, die jeweils einen Vorrat einer Stopfenart enthalten. Durch Drehen der Aufnahmeeinrichtung kann der gewünschte Vorratsstapel in der Nähe, vorzugsweise unterhalb, des Stößels positioniert werden, so dass ein gewünschter Stopfen einfach durch Anlegen von Vakuum an dem freien Ende des Stößels aufgenommen werden kann.

Ein weiteres bevorzugtes Ausführungsbeispiel des Roboterwerkzeugs ist dadurch gekennzeichnet, dass das Stopfenmagazin als Stangenmagazin ausgeführt ist, das mehrere Stopfen umfasst, die bedarfabhängig einzeln mit dem Stößel aufgenommen werden können. Das Stangenmagazin enthält vorzugsweise mehrere gleiche Stopfen. In dem Stangenmagazin sind die Stopfen, zum Beispiel durch eine Federeinrichtung, gegen eine Entnahmeöffnung vorgespannt.

Ein weiteres bevorzugtes Ausführungsbeispiel des Roboterwerkzeugs ist dadurch gekennzeichnet, dass in einem Entnahmebereich des Stangenmagazins mindestens ein Verriegelungszylinder mit einem Verriegelungselement angeordnet ist, das hin und her bewegbar ist, um die Entnahme von einzelnen Stopfen aus dem Stangenmagazin mit Hilfe des Stößels zu ermöglichen. Das Verriegelungselement dient dazu, eine Entnahmeöffnung im Entnahmebereich des Stangenmagazins zu verschließen und zur Entnahme eines Stopfens gezielt freizugeben, wenn der Schwenkhalter mit dem Stößel in der Stopfenaufnahmeposition angeordnet ist. In dem Entnahmebereich des Stangenmagazins können zwei Verriegelungszylinder angeordnet sein, um die einzelne Entnahme von Stopfen zu vereinfachen. Der beziehungsweise die Verriegelungszylinder ist beziehungsweise sind vorzugsweise als Linearzylinder ausgeführt.

Ein weiteres bevorzugtes Ausführungsbeispiel des Roboterwerkzeugs ist dadurch gekennzeichnet, dass eine Schwenkachse der Schwenkeinheit mittig zwischen und quer zu einer Längsachse des Stangenmagazins und einer Zustellbewegungsachse des Stößels angeordnet ist. Die Längsachse des Stangenmagazins und die Zustellbewegungsachse des Stößels sind vorzugsweise in einer Ebene angeordnet, zu der die Schwenkbewegungsachse senkrecht ist.

Weitere Vorteile, Merkmale und Einzelheiten der Erfindung ergeben sich aus der nachfolgenden Beschreibung, in der ein Ausführungsbeispiel im Einzelnen beschrieben ist. Es zeigen:
- Figur 1: eine perspektivische Darstellung eines erfindungsgemäßen Roboterwerkzeugs;
- Figur 2: das Roboterwerkzeug aus Figur 1 in der Vorderansicht;
- Figur 3: das Roboterwerkzeug aus den Figuren 1 und 2 in einer Seitenansicht und
- Figur 4: einen vergrößerten Detailausschnitt des Roboterwerkzeugs aus den Figuren 1 bis 3 mit einem ausgefahrenen Stößel.

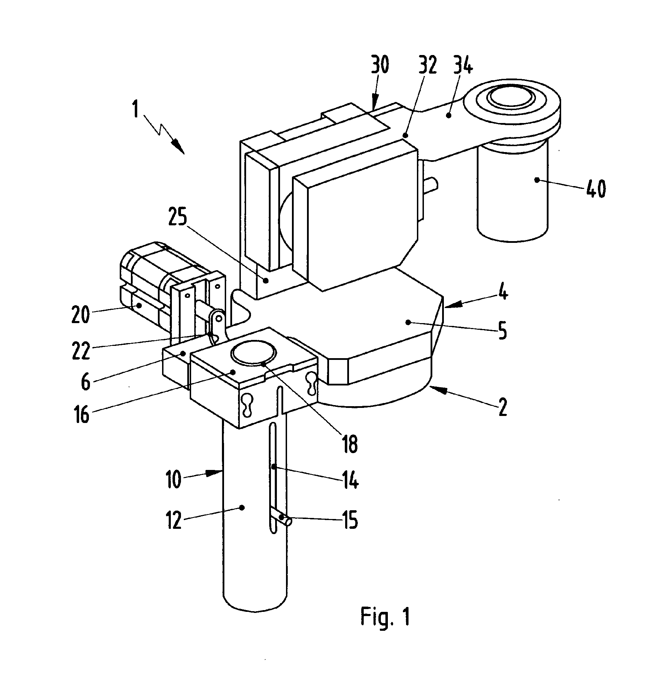

In den Figuren 1 bis 3 ist ein Roboterwerkzeug 1 in verschiedenen Ansichten dargestellt. Das Roboterwerkzeug 1 umfasst einen Roboteranbaubereich 2, mit dem das Roboterwerkzeug 1 an eine Festhälfte eines Industrieroboters angebaut werden kann. Das Roboterwerkzeug 1 wird auch als Loshälfte des Industrieroboters bezeichnet, da es auf einfache Art und Weise gegen ein anderes Roboterwerkzeug, zum Beispiel einen Düsenwechselkopf, der verschiedene Lanzen zum Applizieren eines Wachses in Hohlräume eines Kraftfahrzeugs aufweist, ausgewechselt werden kann.

In der industriellen Fertigung von Kraftfahrzeugen werden beispielsweise Hohlräume in bestimmten Bereichen des Kraftfahrzeugs mit Wachs gefüllt, um die Hohlräume zu versiegeln. Dabei wird das Wachs durch Löcher appliziert, die nach dem Einbringen des Wachses in die Hohlräume mit Hilfe von Stopfen verschlossen werden.

Das erfindungsgemäße Roboterwerkzeug 1 wird z.B. nach dem Applizieren des Wachses mit Hilfe des Düsenwechselkopfes gegen den Düsenwechselkopf ausgetauscht. Zu diesem Zweck wird das Roboterwerkzeug 1 mit dem Roboteranbaubereich 2 an dem Industrieroboter angebracht. Dann können auf einfache Art und Weise bedarfsabhängig die Stopfen mit Hilfe des Industrieroboters automatisch an dem Kraftfahrzeug montiert werden, um zum Beispiel die Löcher von der Hohlraumversiegelung zu verschließen.

Das Roboterwerkzeug 1 umfasst eine Trageinrichtung 4 mit einer Grundplatte 5, von der ein Ansatz 6 ausgeht. An dem Ansatz 6 der Trageinrichtung 4 ist ein Stangenmagazin 10 angebracht. Alternativ oder zusätzlich kann an der Trageinrichtung 4 ein Revolvermagazin angebracht sein, das eine drehbare Aufnahme für mehrere Stapel mit unterschiedlichen Stopfen umfasst. Das Stangenmagazin 10 enthält, im Vergleich zu dem Revolvermagazin, vorzugsweise nur eine Art von Stopfen.

Das Stangenmagazin 10 umfasst ein Aufnahmerohr 12, das an einem Ende geschlossen ist. In dem Aufnahmerohr 12 ist eine Feder 13 gegen einen Stapel von Stopfen gleicher Bauart vorgespannt. Um den Füllstand der Stopfen in dem Aufnahmerohr 12 nach außen sichtbar zu machen, weist das Aufnahmerohr 12 einen länglichen Schlitz 14 auf, durch den ein Stift 15 senkrecht zu dem Schlitz 14 nach außen ragt. Der Stift 15 dient zum Beispiel dazu, den Stopfenfüllstand in dem Aufnahmerohr 12 anzuzeigen. Alternativ oder zusätzlich dient der Stift 15 dazu, die Feder 13 beim Einlegen eines Stopfenstapels in das Aufnahmerohr 12 herunterzudrücken beziehungsweise zusammenzudrücken.

An seinem dem geschlossenen Ende abgewandten Ende ist das Aufnahmerohr 12 des Stangenmagazins 10 durch einen Deckel 16 verschlossen, der eine Entnahmeöffnung umfasst. In der Entnahmeöffnung ist ein Stopfen 18 entnahmebereit angeordnet. Die einzelne Entnahme des Stopfens 18 aus dem Stangenmagazin 10 wird durch einen Verriegelungszylinder 20 ermöglicht, der als Linearzylinder ausgeführt ist und ein Verriegelungselement 22 umfasst.

Das Verriegelungselement 22 ist mit Hilfe des Verriegelungszylinders 20 so hin und her bewegbar, dass es auf einfache Art und Weise die einzelne Entnahme des Stopfens 18 ermöglicht. Um die einzelne Entnahme der Stopfen aus dem Stangenmagazin 10 weiter zu vereinfachen beziehungsweise zu verbessern, kann auch ein zweiter Verriegelungszylinder mit einem zweiten Verriegelungselement im Entnahmebereich des Stangenmagazins 10 angeordnet werden.

Die Trageinrichtung 4 umfasst des Weiteren eine Tragwand 25, die sich senkrecht zu der Grundplatte 5 erstreckt. An der Tragwand 25 ist eine Schwenkeinheit 30 befestigt, die einen Schwenkhalter 32 umfasst, von dem ein Schwenkarm 34 ausgeht. An dem freien Ende des Schwenkarms 34 ist ein Zustellzylinder 40 befestigt, der als Linearzylinder ausgeführt ist.

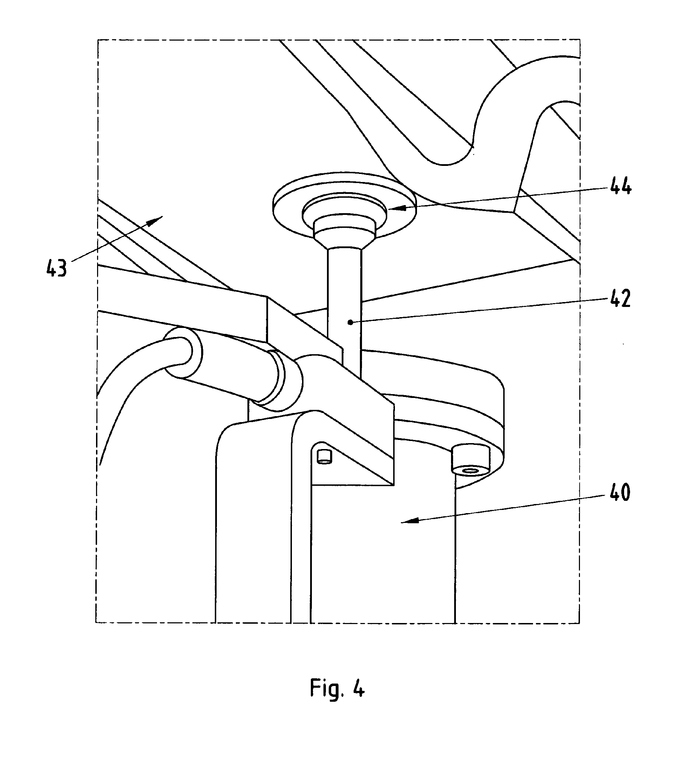

In Figur 4 sieht man, dass der Zustellzylinder 40 einen Stößel 42 umfasst, der aus dem Zustellzylinder 40 ausfahrbar ist, um einen Stopfen an einem Schweller 43 eines Kraftfahrzeugs zu montieren. In den Stößel 42 ist eine Vakuumzufuhr integriert, um an einem freien Ende 44 des Stößels ein Vakuum anzulegen. Durch das Anlegen des Vakuums kann ein Stopfen auf einfache Art und Weise sicher an dem freien Ende 44 des Stößels 42 gehalten werden.

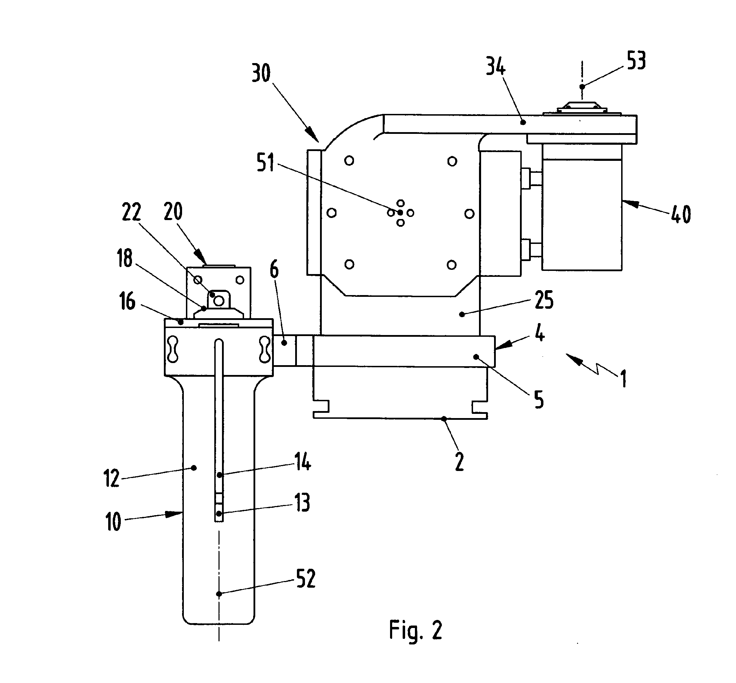

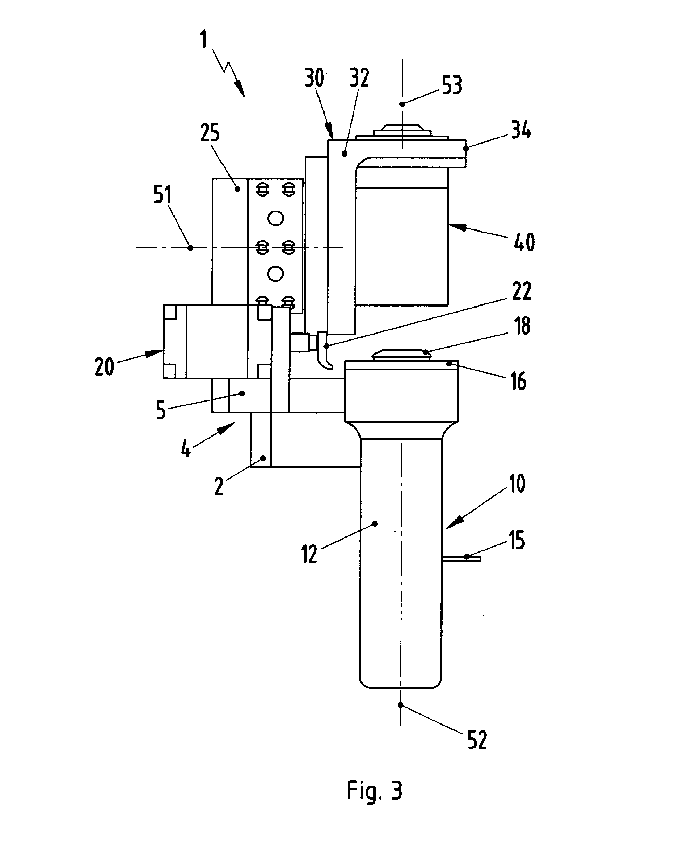

In den Figuren 2 und 3 sieht man, das der Schwenkhalter 32 der Schwenkeinheit 30 um eine Schwenkachse 51 verschwenkbar ist, um den Zustellzylinder 40 mit dem Stößel 42 aus seiner in den Figuren 1 bis 4 dargestellten Stopfenmontageposition um 180 Grad zu verschwenken. Durch das Verschwenken um 180 Grad wird der Zustellzylinder 40 mit dem Stößel 42 so oberhalb des Deckels 16 des Stangenmagazins 10 positioniert, dass das freie Ende 44 des Stößels 42 oberhalb von dem Stopfen 18 angeordnet ist. Dann kann der Stopfen 18 auf einfache Art und Weise durch Anlegen von Vakuum an dem freien Ende 44 des Stößels 42 aus beziehungsweise von dem Stangenmagazin 10 entnommen werden.

Durch ein erneutes Verschwenken des Schwenkhalters 32 der Schwenkeinheit 30 mit dem Zustellzylinder 40 und dem Stößel 42, an dessen freiem Ende 44 dann der Stopfen 18 gehalten ist, wird der Schwenkhalter 32 wieder in die dargestellte Stopfenmontageposition gebracht. Dann kann der Stopfen 18 durch Ausfahren des Stößels 42 montiert werden, wie man in Figur 4 sieht. Die Vakuumzufuhr durch den Stößel 42 kann nach der Montage abgeschaltet werden.

In den Figuren 2 und 3 ist die Längsachse des Stangenmagazins 10 mit 52 und die Zustellachse des Zustellzylinders 40 mit 53 bezeichnet. In Figur 2 sieht man, dass die Schwenkachse 51 der Schwenkeinheit 30 senkrecht zur Zeichenebene in Figur 2 und senkrecht zu den Achsen 52 und 53 verläuft. Gleichzeitig ist die Schwenkachse 51 mittig zwischen den beiden Achsen 52 und 53 angeordnet.

In Figur 3 sieht man, dass die Längsachse 52 des Stangenmagazins 10 in einer gemeinsamen Ebene mit der Zustellachse 53 des Zustellzylinders 40 angeordnet ist. Die in dem Roboterwerkzeug 1 verwendeten Zylinder 20, 40 sind vorzugsweise als Pneumatik-Hubzylinder ausgeführt. Die Schwenkeinheit 30 ist vorzugsweise als pneumatisches Drehmodul ausgeführt.

Durch das erfindungsgemäße Roboterwerkzeug 1 wird ein einfaches Werkzeug geschaffen, durch welches das Stopfensetzen mit relativ wenigen Bewegungen automatisch schnell und einfach durchgeführt werden kann. Neue Stopfen können in Nebenzeiten vormagaziniert werden, indem zum Beispiel ein Stapel von zehn Stopfen in das Stangenmagazin 10 hineingedrückt wird. Die einzelnen Stopfen können dann mit Hilfe der Schwenkeinheit 30 zeitsparend beim Verfahren des Industrieroboters zwischen zwei Montagepositionen aus dem Stangenmagazin 10 entnommen und gesetzt werden.

## Patentansprüche

1. Roboterwerkzeug zum Setzen von Stopfen (18) in der industriellen Fertigung, mit einem Roboteranbaubereich (2), mit dem das Roboterwerkzeug (1) an einen Industrieroboter angebaut werden kann, **dadurch gekennzeichnet, dass** das Roboterwerkzeug (1) einen hin und her bewegbaren Stößel (42) aufweist, mit dem ein Stopfen (18) aufgenommen und zugestellt werden kann.

2. Roboterwerkzeug nach Anspruch 1, **dadurch gekennzeichnet, dass** in den Stößel (42) eine Vakuumzufuhr integriert ist, durch welche an einem freien Ende (44) des Stößels (42) ein Vakuum angelegt werden kann, um einen Stopfen (18) an dem freien Ende (44) des Stößels (42) zu halten.

3. Roboterwerkzeug nach einem der vorhergehenden Ansprüche, **dadurch gekennzeichnet, dass** der Stößel (42) mit Hilfe eines Zustellzylinders (40) ein- und ausfahrbar ist.

4. Roboterwerkzeug nach einem der vorhergehenden Ansprüche, **dadurch gekennzeichnet, dass** der Stößel (42) und/oder der Zustellzylinder (40) an einem Schwenkhalter (32) einer Schwenkeinheit (30) angebracht sind/ist, die ein Verschwenken des Stößels (42) zwischen einer Stopfenaufnahmeposition und einer Stopfenmontageposition ermöglicht.

5. Roboterwerkzeug nach Anspruch 4, **dadurch gekennzeichnet, dass** der Schwenkhalter (32) zwischen der Stopfenaufnahmeposition und der Stopfenmontageposition um 180 Grad verschwenkbar ist.

6. Roboterwerkzeug nach Anspruch 4 oder 5, **dadurch gekennzeichnet, dass** der Stößel (42) mit Hilfe der Schwenkeinheit (30) in seiner Stopfenaufnahmeposition in der Nähe eines Stopfenmagazins positionierbar ist, das an dem Industrieroboter befestigt ist.

7. Roboterwerkzeug nach Anspruch 6, **dadurch gekennzeichnet, dass** das Stopfenmagazin als Revolvermagazin ausgeführt ist, das unterschiedliche Stopfen umfasst, die bedarfsabhängig einzeln mit dem Stößel (42) aufgenommen werden können.

8. Roboterwerkzeug nach Anspruch 6, **dadurch gekennzeichnet, dass** das Stopfenmagazin als Stangenmagazin (10) ausgeführt ist, das mehrere Stopfen umfasst, die bedarfsabhängig einzeln mit dem Stößel (42) aufgenommen werden können.

9. Roboterwerkzeug nach Anspruch 8, **dadurch gekennzeichnet, dass** in einem Entnahmebereich des Stangenmagazins (10) mindestens ein Verriegelungszylinder (20) mit einem Verriegelungselement (22) angeordnet ist, das hin und her bewegbar ist, um die Entnahme von einzelnen Stopfen aus dem Stangenmagazin (10) mit Hilfe des Stößels (42) zu ermöglichen.

10. Roboterwerkzeug nach Anspruch 8 oder 9, **dadurch gekennzeichnet, dass** eine Schwenkachse (51) der Schwenkeinheit (30) mittig zwischen und quer zu einer Längsachse (52) des Stangenmagazins (10) und einer Zustellbewegungsachse (53) des Stößels (42) angeordnet ist.
